# EUROPÄISCHE PATENTSCHRIFT

(11) **EP 0 479 056 B1**
(45) Veröffentlichungstag und Bekanntmachung des Hinweises auf die Patenterteilung: **06.09.1995**
(21) Anmeldenummer: 91115909.3
(22) Anmeldetag: 19.09.1991
(51) Int. Cl.: C09B 67/00, D21H 21/28

(54) **Konzentrierte wässrige Lösungen von 2-Phenylbenzthiazolazofarbstoffen**
Concentrated aqueous solutions of 2-phenylbenzthiazolazoic dyes
Solutions concentrées aqueuses de colorants 2-phénylbenzthiazol-azoiques

(30) Priorität: 29.09.1990 DE 4030915
(43) Veröffentlichungstag der Anmeldung: 08.04.1992
(73) Patentinhaber: BASF Aktiengesellschaft, 67063 Ludwigshafen (DE)
(72) Erfinder: Bermes, Rudolf, Dr., W-6700 Ludwigshafen (DE)

(56) Entgegenhaltungen:
- EP-A- 0 270 003
- EP-A- 0 369 940
- FR-A- 2 111 697
- FR-A- 2 373 586
- US-A- 3 963 418

## Beschreibung

Die vorliegende Erfindung betrifft neue wäßrige Lösungen, enthaltend jeweils bezogen auf das Gewicht der wäßrigen Lösung,
a) 5 bis 20 Gew.-% des Farbstoffs der Formel I 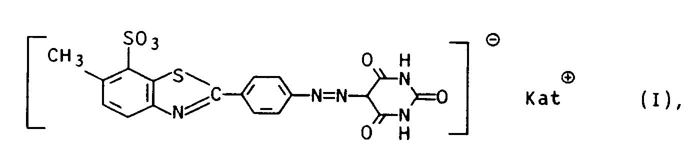 berechnet als freie Säure, worin
   Kat^{⊕} eine Mischung aus Kationen bedeutet, die
   5 bis 50 mol-% Lithiumionen,
   5 bis 40 mol-% Diethanolammoniumionen und
   20 bis 90 mol-% Triethanolammoniumionen enthält, und
b) 0 bis 15 Gew.-% Harnstoff,
sowie ihre Verwendung zum Färben von Papierstoffen.

Aus der US-A-4 071 312 sind Farbstoffe bekannt, die das obengenannte Farbstoffanion aufweisen. Gegenionen sind dabei das Lithium-, Natrium- oder Triethanolammoniumion.

Die DE-A-2 754 486 lehrt die Herstellung von Farbstofflösungen, die das obengenannte Farbstoffanion und als Gegenionen sowohl Diethanolammonium- als auch Triethanolammoniumionen aufweisen.

Es hat sich jedoch gezeigt, daß die Farbstofflösungen des Standes der Technik nur über eine unbefriedigende Lagerstabilität verfügen.

Aufgabe der vorliegenden Erfindung war es daher, neue konzentrierte wäßrige Lösungen des Farbstoffs mit dem obengenannten Anion bereitzustellen, die eine hohe Lagerbeständigkeit aufweisen sollten.

Demgemäß wurden die eingangs näher bezeichneten wäßrigen Lösungen gefunden.

Das Farbstoffanion kann dabei in verschiedenen tautomeren Formen vorliegen, z.B. 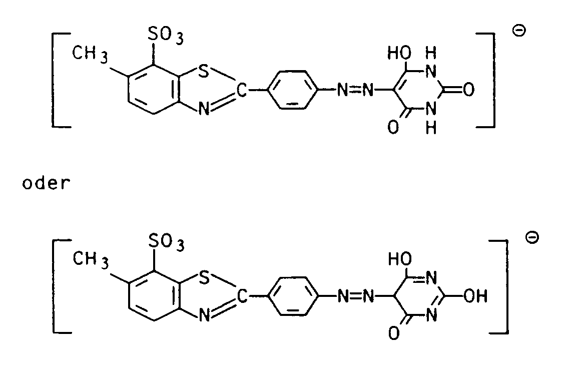
die alle vom Patentanspruch mit umfaßt werden.

Die erfindungsgemäßen wäßrigen Lösungen werden vorteilhaft so hergestellt, daß man die Salze des Farbstoffs in situ erzeugt, d.h. daß man zunächst aus dem Amin (Dehydrothio-p-toluidinsulfonsäure) der Formel II 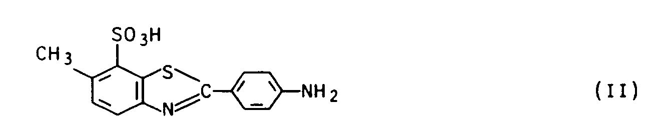
das Diazoniumsalz erzeugt, dann auf an sich bekannte Weise die Kupplung mit Barbitursäure der Formel III 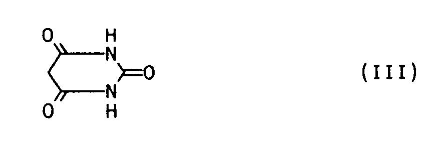
vornimmt, wobei man Lithiumhydroxid, Diethanolamin und Triethanolamin in entsprechendem Verhältnis zugibt. Anschließend kann noch die Zugabe von Harnstoff erfolgen. Schließlich kann noch Wasser zugegeben werden, um die erfindungsgemäße Konzentration des Farbstoffs der Formel I einzustellen.

Die erfindungsgemäßen wäßrigen Lösungen können weiterhin noch 0 bis 10 Gew.-%, vorzugsweise 0 bis 5 Gew.-%, jeweils bezogen auf das Gewicht der wäßrigen Lösung, eines wassermischbaren organischen Lösungsmittels enthalten. Solche Lösungsmittel sind z.B. Glykole, Polyglykole oder Glykolether, wie 1,2-Ethandiol, 1,2- oder 1,3-Propandiol, 1,2-, 1,3-, 1,4- oder 2,3-Butandiol, 1,5-Pentandiol, Neopentylglykol, 1,6-Hexandiol, 2-Methoxyethanol, 1-Methoxypropan-2-ol oder 2-Methoxypropanol, oder Säureamide, wie N,N-Dimethylformamid, N,N-Diethylformamid, N-Methylpyrrolidinon oder ε-Caprolactam.

Die Diazotierung des Amins II erfolgt nach an sich bekannten Methoden, beispielsweise mit Natriumnitrit und Salzsäure oder mit Neopentylglykoldinitrit. Im letzteren Falle enthält die erfindungsgemäße wäßrige Lösung Neopentylglykol, das sich aus dem Diazotierungsreagenz bildet.

Im allgemeinen werden, bezogen auf 100 mol-% Amin II, 100 bis 130 mol-% einer Mischung aus Diethanolamin, Triethanolamin und Lithiumhydroxid verwendet.

Bevorzugt sind wäßrige Lösungen, die 10 bis 20 Gew.-% des Farbstoffs der Formel I, berechnet als freie Säure, und 0 bis 10 Gew.-% Harnstoff enthalten.

Besonders bevorzugt sind wäßrige Lösungen, die den Farbstoff der Formel I enthalten, worin Kat^{⊕} eine Mischung aus Kationen bedeutet, die
5 bis 50 mol-% Lithiumionen,
5 bis 30 mol-% Diethanolammoniumionen und
30 bis 90 mol-% Triethanolammoniumionen enthält.

Es hat sich gezeigt, daß der Anteil an Harnstoff gering oder sogar null sein kann, wenn der Gehalt an Lithiumionen in den erfindungsgemäßen wäßrigen Lösungen hoch ist.

Die erfindungsgemäßen wäßrigen Lösungen besitzen eine hohe Lagerstabilität. Im Gegensatz zu der aus der DE-A-2 754 486 bekannten Präparation weisen die neuen wäßrigen Lösungen nur noch ca. ein Fünftel der dort verwendeten Menge an Base auf.

Nach zweiwöchiger Lagerung bei 60°C, was einer beschleunigten Alterung gleichkommt, tritt bei den erfindungsgemäßen wäßrigen Lösungen praktisch keine nennenswerte Kristallisation auf. Wenn die Lagerung bei Raumtemperatur erfolgt, beträgt die Lagerstabilität bis zu 12 Monate.

Die neuen wäßrigen Lösungen eignen sich in vorteilhafter Weise zum Färben oder Bedrucken von Papierstoffen nach den üblichen, an sich bekannten Methoden. Bevorzugt werden sie in Verfahren zum Färben und Bedrucken von Papier, Halbkartons oder Kartons in der Masse und zur Oberflächenfärbung verwendet. Dabei können Papiere aller Arten, vor allem gebleichtes, ungeleimtes oder geleimtes ligninfreies Papier, gefärbt werden, wobei von gebleichtem oder ungebleichtem Zellstoff ausgegangen werden kann.

Die folgenden Beispiele sollen die Erfindung näher erläutern.

### Beispiel 1

320 g (1 mol) Dehydrothio-p-toluidinsulfonsäure wurden bei Raumtemperatur mit 1500 ml Wasser und 71,6 g (1,28 mol) Kaliumhydroxyd zu einer Suspension verrührt und mit 345 g einer 3,33-molaren wäßrigen Natriumnitritlösung vermischt. Diesen Ansatz ließ man in eine gerührte Mischung aus 250 g konz. Salzsäure und 500 g Eis einlaufen. Die Temperatur stieg kräftig an und wurde durch äußere Kühlung auf 30°C begrenzt. Nach einstündigem Rühren zerstörte man den verbliebenen Nitritüberschuß mit 1 g Amidosulfonsäure, saugte das gelbe Diazoniumsalz auf einer Nutsche ab und wusch es mit 4000 ml Wasser weitgehend säurefrei. Man erhielt 872 g des feuchten, schwerlöslichen Diazoniumsalzes.

174,4 g (0,2 mol dieses feuchten Diazoniumsalzes wurden mit 300 ml Wasser und 25,6 g (0,2 mol) Barbitursäure eine halbe Stunde lang bei Raumtemperatur verrührt. Sodann streute man 2,4 g (0,1 mol) Lithiumhydroxid zur Mischung und tropfte nacheinander 18,7 g (0,1 mol) 80 gew.-%ige wäßrige Triethanolamin-Lösung und 6,6 g (0,05 mol) 80 gew.-%ige wäßrige Diethanolamin-Lösung innerhalb von 30 Minuten in die Reaktionsmischung, die während der einsetzenden Kupplungsreaktion schwach gekühlt wurde, um die Temperatur unter 35°C zu halten. Am Ende der Umsetzung hatte sich eine klare Lösung gebildet, die zuletzt mit Wasser auf eine Gesamtmenge von 600 g einer lagerbeständigen Lösung eingestellt wurde.

### Beispiel 2

Von dem im Beispiel 1 hergestellten Diazoniumsalz der Dehydrothio-p-toluidinsulfonsäure wurden 174,4 g (0,2 mol) mit 300 ml Wasser und 25,6 g (0,2 mol) Barbitusäure eine halbe Stunde lang bei Raumtemperatur verrührt. Unter mäßiger Kühlung setzte man nacheinander in etwa 30 Minuten 1,8 g (0,074 mol) Lithiumhydroxid, 28,0 g (0,15 mol) 80 gew.-%ige wäßrige Triethanolamin-Lösung und 3,3 g (0,025 mol) 80 gew.%ige wäßrige Diethanolamin-Lösung hinzu und verdünnte nach beendeter Kupplung mit 30 g Harnstoff und Wasser auf eine Gesamtmenge von 600 g. Die ursprünglich leicht trübe Lösung wurde durch mäßiges Erwärmen auf 50°C in eine klare, lagerbeständige Farbstofflösung übergeführt.

### Beispiel 3

Man arbeitete analog Beispiel 1, verwendete jedoch 0,6 g (0,024 mol) Lithiumhydroxid, 32,6 g (0,175 mol) 80 gew.%ige wäßrige Triethanolamin-Lösung und 6,6 g (0,05 mol) 80 gew.-%ige wäßrige Diethanolamin-Lösung, um die Kupplung in Gang zu setzen. Zuletzt stellte man mit 60 g Harnstoff und Wasser eine Gesamtmenge von 600 g ein und erhielt eine lagerbeständige Lösung des Farbstoffs.

### Beispiel 4

64,1 g (0,2 mol) Dehydrothio-p-toluidinsulfonsäure und 300 ml Wasser wurden bei Raumtemperatur verrührt und im Verlauf einer Stunde tropfenweise mit 17,5 g Neopentylglykoldinitrit versetzt. Nach dreistündigem Rühren zerstörte man den verbliebenen Nitritüberschuß mit 0,5 g Amidosulfonsäure. In die so erhaltene Suspension des gelben Diazoniumsalzes rührte man nacheinander 25,6 g (0,2 mol) Barbitursäure und im Verlauf einer halben Stunde 1,2 g (0,05 mol) Lithiumhydroxid, 32,6 g (0,175 mol) 80 gew.%ige wäßrige Triethanolamin-Lösung und 3,3 g (0,025 mol) 80 gew.%ige wäßrige Diethanolamin-Lösung ein. Bei der von einer deutlichen Erwärmung begleiteten Kupplungsreaktion bildete sich eine klare Lösung des Farbstoffs, die zuletzt mit 30 g Harnstoff und Wasser auf eine Gesamtmenge von 600 g einer lagerbeständigen Lösung eingestellt wurde.

In entsprechender Weise erhält man lagerbeständige Lösungen, wenn man folgende Mengen an Lithimhydroxid, Di- und Triethanolamin und Harnstoff verwendet. Die Mengen an Di- und Triethanolamin beziehen sich dabei jeweils auf eine 80 gew.-%ige wäßrige Lösung.

| Beispiel Nr. | Lithiumhydroxid [g] | Triethanolamin [g] | Diethanolamin [g] | Harnstoff [g] |
|---|---|---|---|---|
| 5 | 1,8 | 23,5 | 6,6 | 0 |
| 6 | 0,6 | 32,6 | 6,6 | 60 |
| 7 | 2,4 | 23,5 | 3,3 | 0 |
| 8 | 1,2 | 28,0 | 6,6 | 30 |
| 9 | 0,6 | 37,5 | 3,3 | 60 |
| 10 | 0,6 | 28,0 | 9,9 | 30 |

## Patentansprüche

1. Wäßrige Lösungen, enthaltend, jeweils bezogen auf das Gewicht der wäßrigen Lösung,
a) 5 bis 20 Gew.-% des Farbstoffs der Formel I 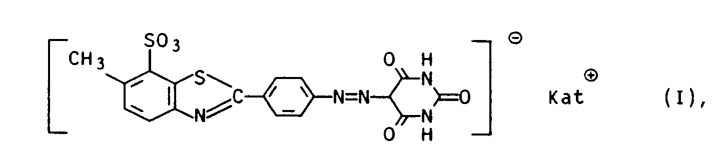 berechnet als freie Säure, worin
Kat^{⊕} eine Mischung aus Kationen bedeutet, die
5 bis 50 mol-% Lithiumionen,
5 bis 40 mol-% Diethanolammoniumionen und
20 bis 90 mol-% Triethanolammoniumionen enthält, und
b) 0 bis 15 Gew.-% Harnstoff.

2. Wäßrige Lösungen nach Anspruch 1, enthaltend 10 bis 20 Gew.-% des Farbstoffs der Formel I, berechnet als freie Säure, und 0 bis 10 Gew.-% Harnstoff.

3. Wäßrige Lösungen nach Anspruch 1, enthaltend den Farbstoff der Formel I, worin Kat^{⊕} eine Mischung aus Kationen bedeutet, die
5 bis 50 mol-% Lithiumionen,
5 bis 30 mol-% Diethanolammoniumionen und
30 bis 90 mol-% Triethanolammoniumionen enthält.

4. Verwendung der wäßrigen Lösungen gemäß Anspruch 1 zum Färben von Papierstoffen.

## Claims

1. An aqueous solution containing, each percentage being based on the weight of the aqueous solution,
a) from 5 to 20 % by weight of the dye of the formula I 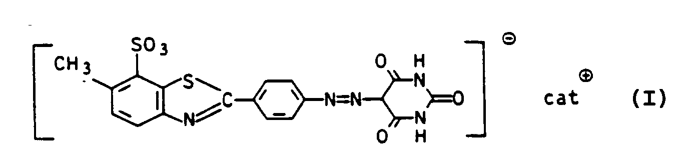 (calculated as free acid) where cat^{⊕} is a mixture of cations comprising from 5 to 50 mol % of lithium ions, from 5 to 40 mol % of diethanolammonium ions and from 20 to 90 mol % of triethanolammonium ions, and
b) from 0 to 15 % of urea.

2. An aqueous solution as claimed in claim 1, containing from 10 to 20 % by weight of the dye of the formula I, calculated as free acid, and from 0 to 10 % by weight of urea.

3. An aqueous solution as claimed in claim 1, containing the dye of the formula I in which cat^{⊕} is a mixture of cations comprising from 5 to 50 mol % of lithium ions, from 5 to 30 mol % of diethanolammonium ions and from 30 to 90 mol % of triethanolammonium ions.

4. The use of an aqueous solution as claimed in claim 1 for dyeing paper stock.

## Revendications

1. Solutions aqueuses contenant, chaque fois par rapport au poids de la solution aqueuse,
a) de 5 à 20% en poids, calculés en tant qu'acide libre, du colorant de formule I 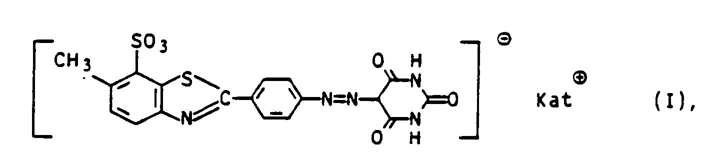 dans laquelle
Kat^{⊕} représente un mélange de cations qui contient
5 à 50% en moles d'ions de lithium,
5 à 40% en moles d'ions de diéthanolammonium et
20 à 90% en moles d'ions de triéthanolammonium, et
b) de 0 à 15% en poids d'urée.

2. Solutions aqueuses selon la revendication 1, contenant de 10 à 20% en poids du colorant de formule I, calculés en tant qu'acide libre, et de 0 à 10% en poids d'urée.

3. Solutions aqueuses selon la revendication 1, contenant le colorant de formule I dans laquelle Kat^{⊕} représente un mélange de cations qui contient
5 à 50% en moles d'ions de lithium,
5 à 30% en moles d'ions de diéthanolammonium et
30 à 90% en moles d'ions de triéthanolammonium.

4. Utilisation des solutions aqueuses selon la revendication 1 pour la coloration de pâtes à papier.
